(19) Europäisches Patentamt
European Patent Office
Office européen des brevets

(11) **EP 4 319 095 B1**

(12) **EUROPEAN PATENT SPECIFICATION**

(45) Date of publication and mention
of the grant of the patent:
**19.02.2025   Bulletin 2025/08**

(21) Application number: **22306170.6**

(22) Date of filing: **02.08.2022**

(51) International Patent Classification (IPC):
*H04L 47/2416* (2022.01)     *H04L 47/2483* (2022.01)
*H04L 47/28* (2022.01)     *H04W 28/02* (2009.01)

(52) Cooperative Patent Classification (CPC):
**H04L 47/28; H04L 47/2416; H04L 47/2483;
H04W 28/0268**

(54) **AUTOMATIC TSN MODEL LEARNING FOR 5G SYSTEMS**

AUTOMATISCHES TSN-MODELLLERNEN FÜR 5G-SYSTEME

APPRENTISSAGE AUTOMATIQUE DE MODÈLE TSN POUR SYSTÈMES 5G

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**07.02.2024   Bulletin 2024/06**

(73) Proprietors:
• **Mitsubishi Electric R&D Centre Europe B.V.
1119 NS  Schiphol Rijk Amsterdam (NL)**
Designated Contracting States:
**FR**
• **MITSUBISHI ELECTRIC CORPORATION
Chiyoda-ku
Tokyo 100-8310 (JP)**
Designated Contracting States:
**AL AT BE BG CH CY CZ DE DK EE ES FI GB GR
HR HU IE IS IT LI LT LU LV MC MK MT NL NO PL
PT RO RS SE SI SK SM TR**

(72) Inventors:
• **BONNEVILLE, Hervé
35708 RENNES CEDEX 7 (FR)**
• **KHANFOUCI, MOURAD
35708 RENNES CEDEX 7 (FR)**
• **GRESSET, Nicolas
35708 RENNES CÉDEX 7 (FR)**

(74) Representative: **Plasseraud IP
104 Rue de Richelieu
CS92104
75080 Paris Cedex 02 (FR)**

(56) References cited:
**WO-A1-2022/159400     US-A1- 2022 046 731**

• **BHATTACHARJEE SUSHMIT ET AL: "Network
Slicing for TSN-Based Transport Networks",
IEEE ACCESS, IEEE, USA, vol. 9, 21 April 2021
(2021-04-21), pages 62788 - 62809, XP011851891,
DOI: 10.1109/ACCESS.2021.3074802**

## Description

## Technical Field

This disclosure pertains to the field of telecommunications.

The disclosure more particularly relates to a method for clustering data flows established through a wireless bridge of a communication system within a time-sensitive network. The disclosure also relates to a corresponding communication system and to a corresponding computer program.

## Background Art

This disclosure addresses the problem of using a 5G network as a communication means for a time sensitive network (TSN), which was initially developed for providing guaranteed communications on ethernet wired networks for industrial applications.

By convention in the current TSN standards, when flowing through a TSN bridge, an end-to-end delay is computed by taking into account the aggregated delays of the transport link between the previous bridge (external link) on the path and the internal link of the bridge between the input (ingress) and output (egress) ports. In a typical TSN network, these aggregated delays are considered in a central scheduler, or central network configuration node (CNC), that guarantees that no packet collision occurs on the transport links in the time domain.

In the context of a one-to-many bridge, the bottleneck lies in the external transport link, on which a TDMA (Time Division Multiple Access) strategy is applied as a result of the CNC scheduling. Even though the internal links of the bridges can be used concurrently, they are in practice used sequentially as a result of the TDMA on the input transport link. The impact on performance is minor when the capacity of the internal links is much higher than the one of the transport link. However, the convention of considering aggregated delays induces significant performance degradation when the internal links capacity is comparable to or worse than the external link one. Indeed, the bridge capability is limited by not exploiting the possibility of using internal links concurrently.

Such a situation occurs when considering a 5G TSN bridge, wherein the internal links capacity is related with the wireless transmission capacity, which is in general worse than the input link capacity relying on wired ethernet. By using the state-of-the-art model and representing the 5GS as a one-to-many topology, a TDMA strategy is applied among all packets flowing though the 5G TSN bridge. Unfortunately, the TDMA is often not the best multiplexing scheme for a wireless network, as other multiplexing dimensions can be exploited with an improved performance. Examples of multiplexing dimensions include frequency (using several sub-bands in the frequency domain), space (using multiple antennas) and site (frequency reuse among several non-interfering sites). Thus, the state-of-the-art definition of a model of the 5G TSN bridge fails to exploit the multiplexing capability of a 5GS, which results in a sub-optimal performance.

The time multiplexing capability of a 5GS is often well below the one of ethernet fixed networks. For example, the minimal time unit of a 5GS is a slot, which longs at least a hundred microseconds while the maximum frame duration on a gigabit ethernet link is around 12 microseconds. Thus, the low time granularity of the 5GS is taken into account in the declaration of the independent delay as a price to pay for any frame transmission. This is necessary as the dependent and independent delays are use in the CNC to compute guaranteed delays. However, the 5GS relies on a wireless interface which naturally allows broadcasting. This involves that several data flows can be transmitted concurrently with a variable capacity according to the deployment, terminal positions and channel conditions, number of data flows sharing the wireless channel concurrently, and so on. This multiplexing capability of the 5GS is not inherently taken into account when considering the state-of-the-art 5GS TSN bridge representation. Indeed, with this bridge model, the CNC presents packets at the bridge input in a TDMA fashion, following the low internal time granularity of the 5GS. Document US 2022/046731 A1 (TALEBI FARD PEYMAN [US] ET AL) 10 February 2022 (2022-02-10), discloses a 5G System (5GS) operated as a strand-alone time sensitive network (TSN) or a part of it. The 5GS supports different modes of operation. In a fully distributed mode, the TSN end stations (e.g. talkers and listeners), may communicate stream requirements directly to the TSN network. The TSN bridge on the path from talkers to listeners may propagate the TSN user and network configuration information along with the active topology for the TSN stream to the neighboring bridges. The network resources may be managed locally in each TSN bridge. In a centralized mode, the end stations communicate the TSN stream requirements directly to the TSN network, and said requirements are forwarded to a centralized network configuration (CNC). The TSN bridge provide their network capabilities and active topology information to the CNC, and the CNC computes the respective end-to-end communication paths from talker to listener to fulfill the TSN stream requirements as provided by the end stations. The computation results is provided by the CNC as TSN configuration information to the TSN bridge as network configuration information.

In order to improve the system performance and exploit the multiplexing capability of a wireless bridge such as a 5GS and compensate its low time granularity, it is needed to design a better TSN bridge model of such wireless bridge.

## Summary

This disclosure improves the situation.

It is proposed a method for clustering data flows established through a wireless bridge that is formed by a wireless communication system and integrated within a time-sensitive network,

- the wireless bridge being handling a plurality of user terminals,
- the time-sensitive network comprising a core network-side end station,
- the time-sensitive network further comprising a plurality of device-side end stations, a device-side end station being attached to a user terminal,
- at least two data flows being established in the time-sensitive network and forwarded by the wireless bridge, with one data flow being established between the core network-side end station and a single device-side end station,

the method comprising:

- obtaining, at a functional entity of a core network component of the wireless bridge, for each data flow of the at least two data flows, an indicator of a sequential communication performance of said data flow, corresponding to when the at least two data flows are established sequentially,
- obtaining, for each data flow of the at least two data flows, an indicator of a concurrent communication performance of said data flow, corresponding to when the at least two data flows are established concurrently,
- clustering the at least two data flows into clusters of dependent data flows based on the obtained indicators, such that:

  o two given data flows are independent if the difference between the sequential communication performance and the concurrent communication performance is lower than a predetermined threshold, and are otherwise dependent,

  o any two data flows belonging to two different clusters are independent, and

  o any two data flows of the same cluster are dependent.

The specific clustering defined above allows automatically discovering, from data flow measurements, a virtual topology, so-called TSN model, of the wireless bridge as a set of independent channels, where each channel corresponds to a cluster and is associated to a pair of end-to-end guaranteed delays, namely a dependent and an independent delay.

Additionally, the end-to-end guaranteed delays of each independent channel, as described by the TSN model topology, can be specifically measured by activating independently the data flows within each cluster, and may be provided, along with the TSN model, to the central network configuration entity (CNC) that handles the data flow scheduling in the TSN.

In the specific clustering defined above, a communication performance for a given channel may be defined by one or more delays associated to one or more communications through said given channel.

In some examples, these delays may be for instance end-to-end delays between two user terminals connected through said channel, as described above, where these delays may differ depending on a channel activation scheme. Alternately, in some examples, these delays may include radio transmission delays associated to radio links between user terminals and their serving end stations, where activating a given radio link between a given user terminal and its serving end station equates to activating a given channel between the given user terminal and another user terminal in the communication network.

The TSN model is accurate, accounts for any types of multiplexing capabilities of the wireless bridge, and the corresponding end-to-end guaranteed delays allow for the CNC to compute the routing and scheduling of packets in the TSN network using the wireless bridge with an improved data flow performance over known methods.

In another aspect, it is proposed a computer software, or program, comprising one or more instructions to implement at least a part of a method as defined here when the software is executed by a processor. In another aspect, it is proposed a computer-readable non-transient recording medium on which a software is registered to implement the method as defined here when the software is executed by a processor.

In another aspect, it is proposed a communication system within a time-sensitive network, the communication system comprising a wireless bridge handling a plurality of user terminals, the time-sensitive network comprising a core network-side end station, the time-sensitive network further comprising a plurality of device-side end stations, a device-side end station being attached to a user terminal, at least two data flows being established in the time-sensitive network, with one data flow being established between the core network-side end station and a single device-side end station, the communication system being configured for:

- at a functional entity of a core network component of the wireless bridge, obtaining, for each data flow of the at least two data flows, an indicator of a sequential communication performance of said data flow corresponding to when the at least two data flows are established sequentially, and obtaining, for each data flow of the at least two data flows, an indicator of a concurrent communication performance of said data flow, corresponding to when the at least two data flows are established concurrently,

- clustering the at least two data flows into clusters of dependent data flows based on the obtained indicators, such that:

  o two given data flows are independent if the difference between the sequential communication performance and the concurrent communication performance is lower than a predetermined threshold, and are otherwise dependent,

  o any two data flows belonging to two different clusters are independent, and

  o any two data flows of the same cluster are dependent.

The following features can be optionally implemented, separately or in combination one with the others.

In an example, the communication performance of a data flow established between a pair of end stations may relate to at least one element of a list comprising:

- a first value of an end-to-end latency for uplink communication between the pair of end stations,

- a second value of the end-to-end latency for downlink communication between the pair of end stations, and

- a maximum value between the first value and the second value.

The first value and/or the second value may further be related to a best-effort communication between the end stations.

In this example, latency, according to multiple alternate definitions, is chosen as a metric for determining communication performance, due to its relevance for determining end-to-end guaranteed delays. Any known QoS metric could however be chosen instead, or in combination with latency.

When the communication performance of the data flows all relate to a value for uplink communication only, then the clustered data flows all have a same orientation being uplink. Conversely, when the communication performance of the data flows all relate to a value for uplink communication only, then the clustered data flows all have a same orientation being downlink. This means that separate sets of clustered data flows may be determined and provided to serve as two separate TSN models of the wireless bridge for uplink and for downlink.

In an example, a given user terminal attached to a device-side end station being active when receiving or transmitting a given data flow, and being otherwise inactive:

- the indicator of the sequential communication performance of a first data flow of the at least two data flows may comprise:

  o a first measurement of a communication performance of the first data flow, and

  o a first activity indicator indicating, at least, that, at the time of the first measurement, a first user terminal, attached to the device-side end station involved in receiving or transmitting the first data flow, is active while a second user terminal, attached to the device-side end station involved in receiving or transmitting the second data flow, is inactive, and

- the indicator of the concurrent communication performance of the first data flow may comprise:

  o a second measurement of a communication performance of the first data flow, and

  o a second activity indicator indicating, at least, that, at the time of the second measurement, the first and the second user terminals are both active.

The activity indicators as defined above allow characterizing a measurement of a communication performance by determining whether such measurement is to be interpreted as being a sequential or a concurrent communication performance.

The activity indicators may be determined from binary matrices, a binary matrix comprising a list of binary variables, one binary variable corresponding to one device-side end station, the binary variable having a first value when the user terminal attached to the corresponding device-side end station is active, the binary variable having a second value when the user terminal attached to the corresponding device-side end station is inactive.

Such binary matrices are an effective way to store the activity indicators, without a limit on the number of UEs handled by the wireless bridge, and with a minimal data storage size requirement.

The method may further comprise:

- prior to obtaining the indicators of sequential and concurrent communication performance for the at least two flows, activating the at least two flows according to a sequence of a plurality of predetermined activation topologies, and

- wherein, for each data flow of the at least two data flows, the indicator of the sequential communication performance of said data flow and the indicator of the concurrent communication performance of said data flow are each obtained by a measurement conducted under a different activation topology of the sequence of activation topologies.

Activating flows according to the above sequence of activation topologies corresponds to injecting traffic for the specific purpose of quickly performing a robust clustering, by quickly identifying the relative dependencies of a series of data flows, in order to allow quickly providing to the CNC an accurate virtual topology of the wireless bridge.

Different ways of optimizing the accuracy of the virtual topology while minimizing the quantity of injected traffic are proposed in the following examples.

In an example, the sequence of activation topologies may be optimized for maximizing a variability of the communication performance of the at least two flows between two consecutive activation topologies. For instance, a given activation topology of the sequence may be inferred iteratively, through machine learning, based on previous activation topologies of the sequence and on the associated measured communication performances.

In another example, the sequence of activation topologies may be designed so that for any two consecutive activation topologies of the sequence of activation topologies, a fixed number of user terminals is active in one of the two consecutive activation topologies and inactive in the other one. This equates to setting a fixed distance between two consecutive activation topologies, the distance being the number of user terminals that are active in a single one of the two consecutive activation topologies.

In an example, clustering the at least two data flows into clusters of dependent data flows may comprise:

- obtaining an autoencoder comprising an encoder for mapping inputs to a code according to a compression matrix and a decoder for mapping the code to a reconstruction of the inputs according to a decompression matrix, the code being a representation of the inputs as a set of deep feature variables in a reduced feature space,
- training the autoencoder using the obtained indicators as the inputs,
- after training the autoencoder, obtaining the compression matrix, the decompression matrix and the set of deep feature variables,
- determining a clustering scheme based, at least, on the obtained compression matrix, and
- clustering the at least two data flows according to the clustering scheme, by using the obtained set of deep feature variables as centroids for the clusters.

An autoencoder is a powerful tool, favored over more classical methods such as principal component analysis, for identifying patterns in input data automatically and without supervision.

This specific use of an autoencoder is particularly effective for determining whether groups of data flows are dependent or independent and, as a result, for determining the clusters of dependent data flows.

The invention is defined by the appended claims.

## Brief Description of Drawings

Other features, details and advantages will be shown in the following detailed description and on the figures, on which:

**Fig. 1**

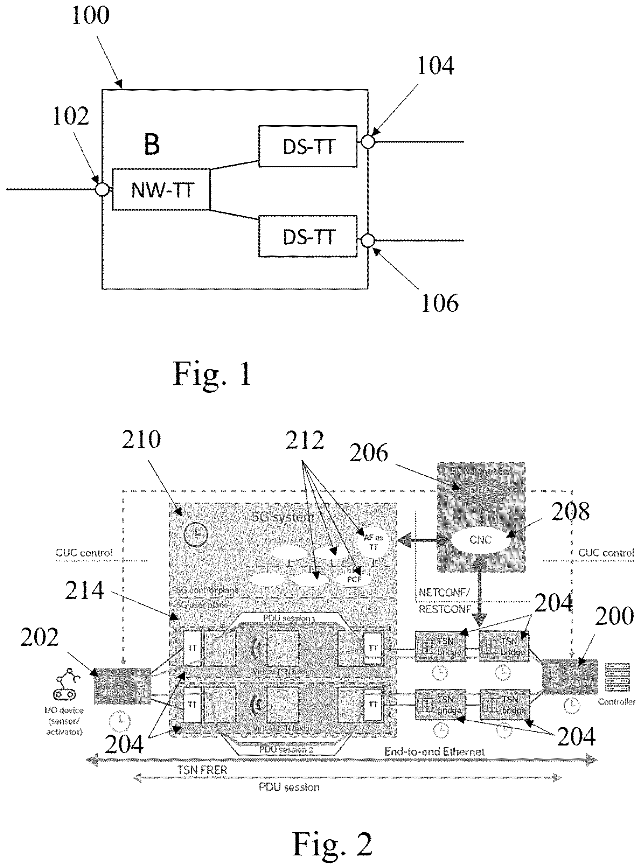

[Fig. 1] is a state-of-the-art representation of a 5G system as a TSN bridge.
**Fig. 2**
[Fig. 2] is a state-of-the-art representation of a 5G system as a TSN bridge in a TSN network.
**Fig. 3**

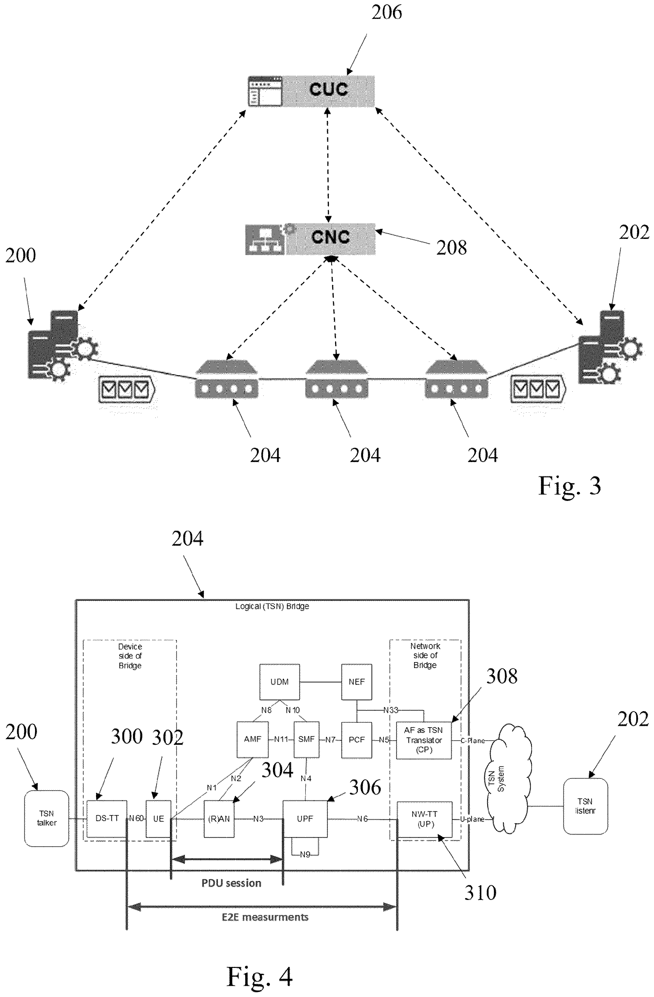

[Fig. 3] illustrates a TSN network according to an embodiment.
**Fig. 4**
[Fig. 4] illustrates a state-of-the-art integration of a wireless bridge within a TSN network.
**Fig. 5**

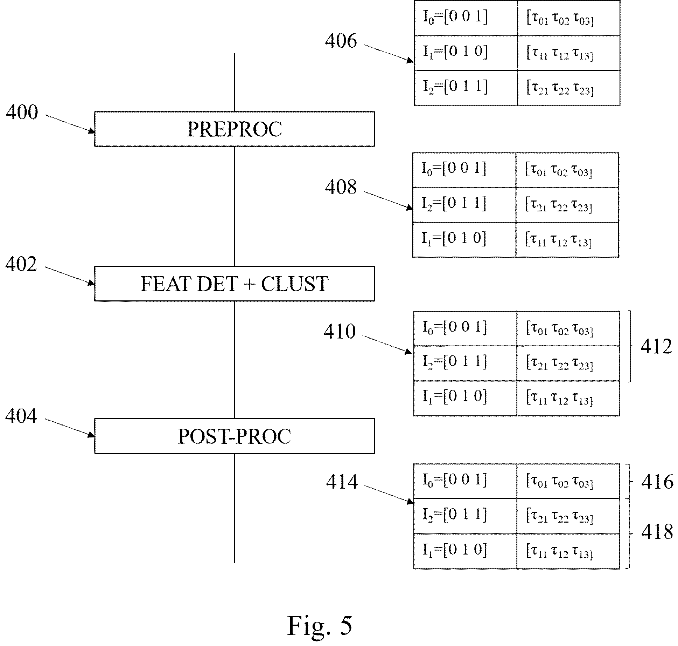

[Fig. 5] illustrates is a flow chart of a software-implemented method for clustering input data according to an embodiment, as well as the related data transformations.
**Fig. 6**

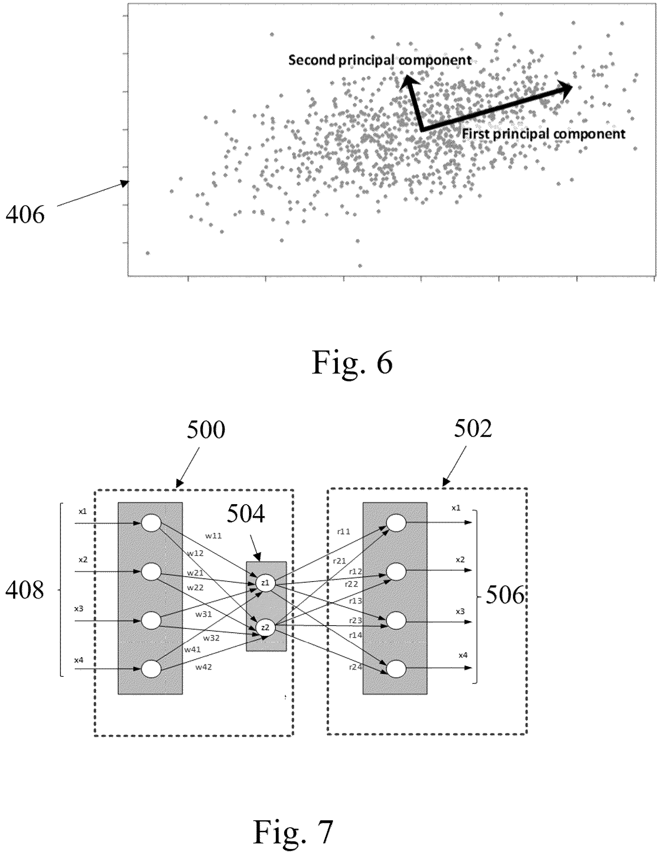

[Fig. 6] illustrates a principal component analysis for data preprocessing according to an embodiment.
**Fig. 7**
[Fig. 7] illustrates an auto-encoder for data processing according to an embodiment.
**Fig. 8**

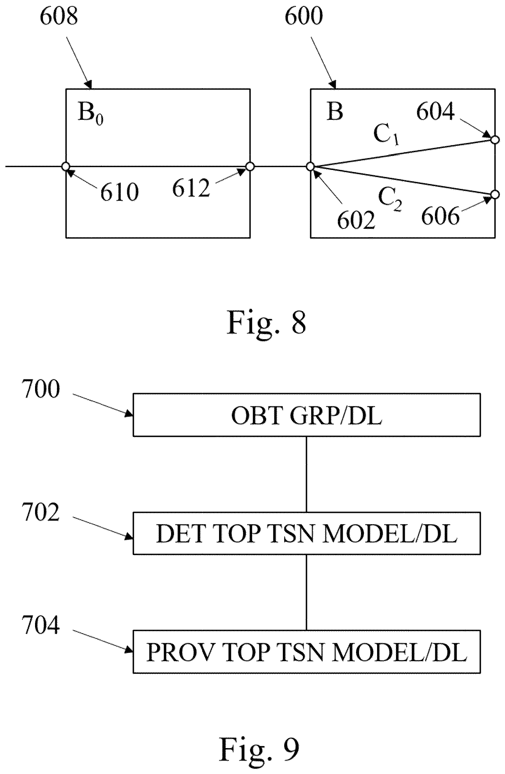

[Fig. 8] illustrates a TSN model of a wireless bridge according to an embodiment.
**Fig. 9**
[Fig. 9] is a flow chart of a software-implemented method for determining a topology of a wireless bridge according to an embodiment.
**Fig. 10**

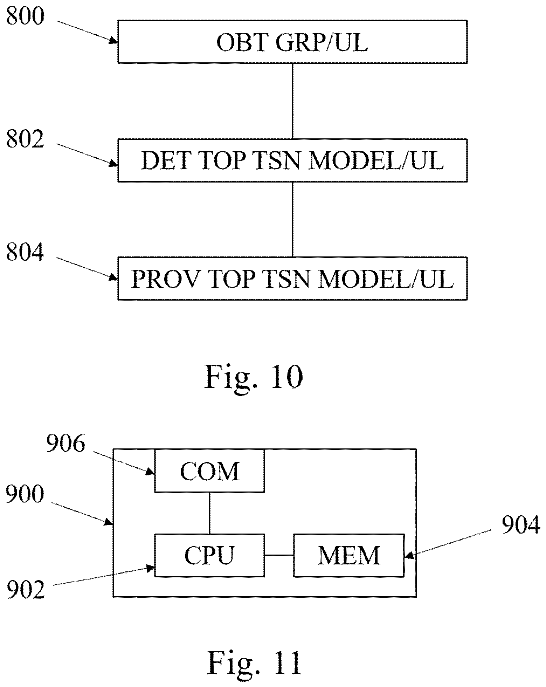

[Fig. 10] is a flow chart of a software-implemented method for determining a topology of a wireless bridge according to an embodiment.
**Fig. 11**
[Fig. 11] is an example of a processing circuit, suitable for running any of the software represented on Fig. 5, Fig. 9 and Fig. 10, according to an embodiment.

## Description of Embodiments

The disclosure addresses the problem of black box identification of an equivalent TSN bridge model for a wireless system such as a 5G system, suitable to integrate the wireless system to a TSN network as a logical TSN bridge.

The identification of this equivalent TSN model may be done based on application layer measurements from the wireless system (e.g. 5GS) and may use a deep learning framework.

It is considered that measurements at an application layer (which is the 7th layer of the OSI model) are readily available at a core network component of the wireless bridge for determining the equivalent TSN bridge model for the wireless system.

The application layer measurements may be correlated with various communication resources of the wireless system, which are not directly available in a black box approach. Such communication resources, which are not known a priori, may include, for instance, spatial multiplexing capabilities, broadcasting capabilities and/or frequency reuse factors.

The disclosure proposes a technique and a framework for a black box identification of the equivalent TSN bridge model from these application layer measurements.

Integration of a 5G system in a TSN network: state-of-the-art

The disclosure focuses on the transmission of packets with delay constraints. For achieving a guaranteed end-to-end latency for the transmission of a packet between a talker and a listener, it is necessary to rely on a predetermined data path or route and scheduling of operation of the network elements along the path.

In the state-of-the-art approach of the integration of a 5G system (5GS) in a TSN network, the 5GS is represented using a regular TSN bridge model (100), with a one-to-many topology containing ports/gates as illustrated in Figure 1 where the bridge has one NW (network-side) port (102), and two DS (device-side) ports (104, 106). The internal structure of the 5GS involves network-side translators (NW-TT) which are elements of the 5GS making the interface between the TSN network and the 5G user plane (UP) in the core network and device-side translator (DS-TT) making the interface between the 5G UP and the devices.

TSN Networks

The general structure of the TSN network is illustrated in Figure 3.

A talker (200) and a listener (202) are represented, both as end stations (ES) of the TSN network. A series of bridges (204) is further represented.

Bridges (204) are the packet switching devices of a TSN network. Packets arriving to an ingress port of a bridge can be routed to an egress port in a bounded delay, according to some parameters specific to each port pair, represented by an internal link. The parameters are usually: a dependent delay factor (i.e., which depends on the payload and can be seen as the inverse of the instantaneous throughput of the link) and an independent delay (i.e., a fixed delay for each communication).

A TSN network further comprises a centralized user configuration node (CUC) (206) configured to communicate with the end stations (200, 202) in order to receive their flow requirements.

A TSN network further comprises a centralized network configuration node (CNC) (208). The CNC is able to receive, from the different TSN bridges (204), egress and ingress port identification, traffic class and QoS indicators as minimum and maximum delays per port pairs.

The CNC (208) is further able to receive from the CUC (206), through a user/network interface, data related to user configuration. The data related to user configuration may comprise the flow requirements of the end stations. The data related to user configuration may further comprise a TSN network topology that is related to the flow requirements of the end stations. The data related to user configuration may further comprise capacities of network links according to said topology.

The CNC (208), having gathered the topology and capacities of the network links as well as the requirements of the data streams as described above, defines routing decisions, i.e. bridge selection, in other words the data path for transmitting packets from one end station (200) to another end station (202) through the bridges (204). This data path is computed by the CNC, in a known manner, so as to fulfil the stream requirements of the TSN flows.

The CNC (208) further computes a scheduling of gate openings for the packets to flow from one ES to another ES while guaranteeing their transmission delay, with the constant purpose of fulfilling the stream requirements of the TSN flows. For doing so, the CNC computes the cumulated delay from egress port to egress port of two consecutive bridges on the computed data path, where the egress ports are defined at the output port of the bridges in the flow direction of the packets along the path (while ingress ports are the bridges input ports).

The scheduling calculated at the CNC is a time-gating window table, according to which gates are sequentially opened and closed. In practice, for each bridge port, the packets are buffered and transmitted sequentially when the corresponding gate opens. Thus, time multiplexing is inherent to each bridge port, while concurrent transmission is possible between two different ports of a TSN bridge.

5G systems

The disclosure is primarily focused on the example of 5G systems, but its general principle may also be applied to other wireless systems with multiplexing capabilities in different dimensions such as time, frequency, and space.

The deployment of 5G systems in factories is related to the integration of 5G systems in time sensitive networks. In the context of this integration, a 5G system (5GS) acts as at least one Ethernet bridge, which belongs to the data link, or 2nd, layer of the OSI model, that is integrated within a IEEE TSN network.

A general view of the internal structure of a 5GS is given in Figure 2, along with several elements of a TSN network according to the fully centralized model of IEEE 802.1Qcc. The main components of a 5GC (5G core network) and of a 5G RAN (5G radio access network) are represented in Figure 2 in the form of nodes, or functional entities.

In particular, a functional split is observed between a control plane (210) and a user plane (214).

The control plane involves a PCF (Policy Charging Function) and a TSN-AF (Time-Sensitive Network Application Function), both of which are nodes (212) of the 5GC.

The user plane involves a single UPF (User Plane Function) for routing packets from the 5G-RAN to network (NW) ports. The user plane further involves the 5G-RAN, more specifically the gNBs (next generation Node Base stations) which are configured to communicate with the UPF and to handle UEs (User Equipments).

The CUC (206) (Centralized User Configuration node) and the CNC (208) (Centralized Network Configuration node) represented in Figures 2 and 3 are the control elements of the TSN network that are connected, in Figure 2, with the 5GS control plane via the TSN-AF.

Figure 4 illustrates a known integration of a 5GS acting as an Ethernet bridge in a TSN network according to the 3GPP technical report TR 23.734. In this framework, the 5GS comprises, on a network side (NW-TT) (310), one or more ports on a single user plane function (UPF) (306), the ports acting as user plane tunnels between the UPF and user equipments (UE) (302) through a radio access network (304). The 5GS acting as an Ethernet bridge further comprises, on a device-side (DS-TT) (300), one port per user equipment. For each 5GS Bridge of a TSN network, the port on the NW-TT side supports the connectivity to the TSN network, while the ports on DS-TT side are, each, associated to a corresponding protocol data unit (PDU) session providing connectivity to the TSN network according to the 3GPP technical specification TS 23.501 .

In Figure 4, it is shown that the logical bridge configuration information is transmitted to the TSN network via a trusted TSN application function (AF) (308). This configuration information is related to network status and performance parameters that are received from the access management function (AMF) by the session management (SMF) in the unified data management (UDM) and transmitted to the AF via the network exposure function (NEF), using the N33 interface according to the 3GPP technical specification TS 23.502 or directly from the policy charging function (PCF), via the N5 interface, if the AF is considered as trusted.

The measurements considered in the present disclosure are end-to-end (E2E) measurements related to QoS KPI at the application level, that is to say at the application, or 7th, layer of the OSI model. The QoS KPI may be either E2E latency, measured on the uplink or on the downlink, the E2E throughput measured on the uplink or on the downlink, or the E2E link reliability measured on the uplink/downlink and the reference points for this E2E measurements may be for example the DS-TT (device side TSN translator) and the NW-TT ( network side TSN translator).

In the case of multiple deployment of TSN capable UEs in the network, a UE is activated if it is transmitting/receiving the TSN-PDU session that is corresponding to a TSN data flow from the TSN-talker. The UE is not activated if it is not transmitting/receiving PDU-sessions that are corresponding to the TSN flow from the TSN talker to the TSN listener.

The QoS KPI are measured in the 3GPP domain and over the N6 interface that is linking the user plane function (UPF) to the NW-TT on the uplink and over the interface N60 for the downlink transmission.

A QoS KPI measurement necessarily relates to a data flow associated to an active (or activated) UE, hereafter called 'reference UE' and noted UE(0). UE(0) is considered to be part of a deployment of N UEs handled by the 5GS, with the UEs being noted UE(i), i being a natural number ranging from 0 to N-1.

It is herein proposed to record, for each QoS KPI measurement relating to UE(0), the active UEs that are activated along with UE(0) during the measurement. The other UEs of the deployment are assumed to be inactive. Then for each QoS KPI measurement relating to UE(0), the record can be for example a binary matrix $[x_1, x_2, ..., x_{N-1}]$ where the binary variable $x_i$ =1 if UE(i) of the deployment is activated, otherwise, the binary variable $x_i$ =0.

The binary matrix defined previously is referred below as the measurement label or the activation topology label or simply the label. The QoS KPI measurements are arranged as a labelled performance table where the measurements of the activated UEs are labelled by activation topology labels.

Clustering

The clustering is a key step that aims to learn groups of dependent TSN data flows from the QoS KPI measurements and from the associated activation topology labels.

Then, the virtual TSN bridge topology is determined from the groups of dependent TSN data flows.

Let us consider a pair of TSN data flows. The pair is said 'dependent' if the measured end-to end QoS KPI of one TSN data flow of the pair changes whether the other TSN data flow of the pair is simultaneously active or not.

More specifically, it is possible to define a sequential communication performance and a concurrent communication performance. The concurrent communication performance is reflected by the measured end-to end QoS KPI of a given data flow of the pair for an activation topology where both data flows of the pair are activated together. The sequential communication performance is, on the contrary, reflected by the measured end-to end QoS KPI of the given data flow for an activation topology where both data flows of the pair are activated one by one rather than together.

For instance, the pair of UEs formed of UE(0) and UE(1) is dependent when the QoS KPI measurement relating to UEs differs whether $x_1=1$ (concurrent communication performance) or $x_1=0$ (sequential communication performance).

This principle applies more generally to any group of two or more data flows. The sequential communication performance then designates the measured end-to end QoS KPI of a given data flow for an activation topology where no other data flow of the group is simultaneously activated. The concurrent communication performance of the given data flow designates the measured ent-to-end QoS KPI of a given data flow for an activation topology where at least one other data flow of the group is simultaneously activated.

The absolute value of the difference between the sequential and the concurrent communication performance of the given data flow may be computed and is referred to in the following as "QoS KPI change". When a data flow of a group exhibits a QoS KPI change that exceeds a predetermined threshold, then the group of data flows is said dependent. Otherwise, the group of data flows is said independent. The threshold may be preset to a non-zero value that may be positive or negative. The sign and the absolute value of the threshold are chosen depending on the application.

Clustering metrics

The following section presents possible options for the QoS KPI that may be used in the clustering step. The QoS KPI is described in the service level specification (SLS) that is transmitted from the CUC to the TSN talkers and listeners and that are used by the CNC to calculate the schedule over the TSN network.

By means of example, a QoS KPI that is contemplated herein is E2E latency or delay. Examples of key QoS KPIs clustering metrics corresponding to E2E latency include:

- E2E latency for the communication of the TSN data flow between one DS-TT and one NW-TT, i.e. the uplink TSN data flow transfer over the 5GS network,

- E2E latency for the communication of the TSN data flow between one NW-TT and one DS-TT, i.e. the uplink downlink data flow transfer over the 5GS network,

- the maximum value of E2E latency between uplink and downlink data flow transfer in the 5GS network,

- the best effort E2E latency for the communication of the TSN data flow between DS-TT and NW-TT, i.e. best effort uplink TSN data flow transfer over the 5GS,

- the best effort E2E latency for the communication of the TSN data flow between NW-TT and DS-TT, i.e. best effort downlink TSN data flow transfer over the 5GS

- the maximum value of the best effort E2E latency between uplink and downlink data flow transfer in the 5GS network.

Clustering algorithms

A clustering algorithm is used to learn the clustering of the UEs into groups of dependent QoS KPI. The input of the clustering algorithm is the labelled performance table defined above, comprising the recorded QoS KPI measurements that are arranged and labelled by activation topology labels.

The discovery of the performance table may be done in various ways.

For instance, the data flows may be ordered (labeled) and UEs associated to said data flows may be activated sequentially, pair by pair. The performance of the data flows is measured for each activation topology and stored into a data table: this corresponds to a sequential discovery of pairs of data flows.

Alternately, the data flows may be labeled and activated sequentially, pair by pair, in regions of the deployment, the performance of the data flows is then measured and stored into a data table: this corresponds to a lexicographical discovery of the data flows.

When activating UEs for the purpose of measuring a performance of a data flow, said data flow may be associated to an active PDU session or to a dummy PDU session.

The clustering algorithm belongs to a general class of algorithms that is suitable to detect features in the performance table in a similar way that image segmentation algorithms detect regions in images. These features represent a set of data flows with a constant performance over multiple activation topologies, i.e. a set of independent data flows.

From this obtained set of independent data flows, clusters of dependent data flows are constructed and output by the clustering algorithm.

It is now referred to Figure 5, which is a flowchart describing general steps of the clustering algorithm, in an exemplary embodiment.

These general steps include:

- a data pre-processing (400) of the input data (406) (the labelled performance table),

- then a feature detection within the pre-processed data (408) combined with a segmentation (402) of the pre-processed data based on the detected features, and

- finally, a post-processing (404) of the segmented data (410) to obtain and output clustered data (414) (clusters formed of sets of dependent data flows).

Data pre-processing

The objective of the data pre-processing is to optimize the deep clustering performance by the means of a re-ordering of the input data, namely the performance table, with respect to a specific activation topology order. This re-ordering allows simplifying the discovery of the clusters of dependent data flows.

The activation topology order may be determined by the means of various criteria.

An example of criterion is to maximize the variability of the flow performance between two successive activation topologies. For instance, a principal component analysis of the performance data of the flows may be carried out. This allows finding activation topologies that maximize the dispersion of the performance of the flows as eigenvector of the covariance matrix of the performance data.

Another example of criterion is to bind the distance between two successive activation topologies. For instance, a lexicographic order may be chosen where selected subsets of the flows are activated, such that every two successive activated flow sets are disjoint and have a distance of k flows. Considering two successive activation topologies $( x_1^1 ... x_{N-1}^1 )$ and $( x_1^2 ... x_{N-1}^2 )$ for a deployment of UEs, a distance of k flows means that $x_i^1 \neq x_i^2$ for exactly k values of i from 1 to N-1. In a specific embodiment, a gray ordering may be chosen where the distance between two activated topologies is bounded to 1 flow. In other words, this ordering activates (or inactivates) one flow at a time in separate regions of the overall activation topology.

Another example is a combination or an aggregation of at least two orderings described above.

Figure 6 illustrates a principal component analysis for a typical set of input data (406), here represented as a scatter plot, where the principal components determine the direction of the maximum dispersion of the flow data sets.

Feature detection

Feature detection allows performing an actual clustering of the pre-processed data set (the re-ordered performance table) so as to learn some features that are shared by different flows for different activation topologies, i.e. a similar level of performance variability with respect to activation topology changes.

One common technique to perform this clustering is to perform a K-means clustering on the pre-processed data set.

First, a subset of flows is arbitrarily, or randomly, selected. This means that each flow of the subset is selected arbitrarily, or randomly. Further, the number of flows forming the subset may also be arbitrarily, or randomly, selected.

Each selected flow is assigned to a different cluster, as its cluster center.

Then, iteratively:

- the flow exhibiting the closest change, in its QoS performance measurements with respect to the activation topology change, to the center of an existing cluster center is added to said cluster, and

- the center of said cluster is updated as the average of the QoS performance measurements within said cluster.

The K-means clustering automatically converges once all flows are assigned to a cluster.

Yet, this standard clustering does not converge well, in practice, in the case of large input data sets. In particular, due to the cluster initialization, this standard clustering may not provide a satisfying cluster representation of the input data set.

For this reason, it is proposed to use an auto-encoder for the deep clustering purpose. An auto-encoder is a part of regenerative neural network that is trained to reconstruct the data set as shown in Figure 7.

An auto-encoder is a pair of an encoder (500) and a decoder (502), as depicted in Figure 7, that learns a deep representation of the data set by the means of a backpropagation algorithm that attempts to reconstruct the input data at the output of the encoder/decoder pair.

The encoder part of the auto-encoder compresses the pre-processed data (408) $(x_1, x_2, x_3, x_4)$ as described in Figure 7 into a reduced feature space (504) represented by the cluster centers $(z_1, z_2)$ through the following compression relation.

$$z = f_\alpha(Wx)$$

$$W = \begin{bmatrix} w_{11} & w_{12} \\ w_{21} & w_{22} \\ w_{31} & w_{32} \\ w_{41} & w_{42} \end{bmatrix}$$

$$x = (x_1 \quad x_2 \quad x_3 \quad x_4)^T$$

$$z = (z_1, z_2)^T$$

The decoder part reconstructs the original data set (506) from the feature space through the following reconstruction equation

$$x = f_\beta(Rz)$$

$$R = \begin{bmatrix} r_{11} & r_{12} & r_{13} & r_{14} \\ r_{21} & r_{22} & r_{23} & r_{24} \end{bmatrix}$$

$$x = (x_1 \quad x_2 \quad x_3 \quad x_4)^T$$

$$z = (z_1, z_2)^T$$

The functions $f_\alpha$ and $f_\beta$ are non-linear functions that may be for example, sigmoidal functions defined as :

$$f_\alpha(x) = \frac{1}{1 + \exp(-\alpha x)}$$

$$f_\beta(x) = \frac{1}{1 + \exp(-\beta x)}$$

The auto-encoder learns the parameters W for clustering the data and R for reconstructing the data jointly with the sigmoid slope $\alpha$ by performing the following procedure that is known as the back-propagation technique:

- random values are initially assigned to the entries of the matrices W and R, and a loose value is assigned to the sigmoid slope such as $\alpha = \beta = 0.1$,

- the compression and reconstruction equations are used to find the deep feature variables $(z_1, z_2)$,

- the entries of the matrices W and R are updated in order to minimize the reconstruction error, which is the difference between the input data x and the reconstructed data $\hat{x} = f_\beta(R f_\alpha(Wx))$ and in order to increase the sigmoid slopes of the encoder and decoder filters,

- further iterations of finding the deep feature variables and updating the entries of the matrices W and R are then conducted, until the reconstruction error is below a threshold.

Once the auto-encoder parameters W,R,$\alpha$,$\beta$ are learned from the back-propagation technique, the encoder part of the auto-encoder is used as a clustering scheme for the input data as the following :

- the compression matrix *W* and the non-linear function $f_\alpha$ are used to define the clustering scheme, and

- the deep feature variables $(z_1, z_2)$ are used as the centroids of the clusters of dependent data flows to be constructed.

Post-processing

In order to further improve the clustering scheme, a post-processing is conducted.

The post-processing may rely on a K-means clustering scheme such as described previously, initialized by using, as the centroids of the clusters of dependent data flows, the deep feature variables $(z_1, z_2)$ output by the auto-encoder. Other known clustering schemes are also applicable, as long as the deep feature variables $(z_1, z_2)$ output by the auto-encoder are used, in an initialization phase, as descriptive data for the clusters of dependent data flows.

For instance, another option is to further improve the separation of the clusters by the means of calculating the probability of the association of the data to the clusters and adjusting the clusters by the means of inter-cluster Kullback-Lieber divergence maximization.

Proposed TSN model of a 5GS

It is now referred to Figure 8.

Once the groups of UEs are formed and identified, it is possible to determine a main bridge model (600) that is representative of whether different UEs have a competitive access to the time resource or, on the contrary, whether their concurrent activation does not impact data flow performance.

The topology of the main bridge model (600) is as following.

The main bridge model comprises as many NW ports (602) as the number of identified groups of UEs. The main bridge model further comprises as many DS ports (604, 606) as the total number of UEs across all identified groups of UEs. The main bridge model further comprises an internal link between each NW port and all the UEs belonging to the associated group.

Alternatively, the main bridge model may be determined as a plurality of model portions, one for each group of UEs, each model portion having only one NW port and as many internal links and DS ports as the number of UEs in the associated group.

Any configuration of merging of these model portions is possible as long as the configuration links between the group-related NW ports and the UE-related DS ports are kept.

The capacity on the internal links of the main bridge model can be learnt through measurement, i.e., data packets are sent to any UE and the capacity or delay is measured. As a remark, the UEs of the same group should be learnt independently, which involves that the capacity obtained for a given internal link is the capacity when the corresponding UE is the only one activated among the group of UEs it belongs to.

The external link arriving at any ingress port of the main bridge model may be assumed to have zero dependent and independent delays.

State-of the-art models of TSN bridges often comprise a single NW port. Therefore, for compatibility reasons, it is expected that any model of a TSN bridge is also assumed to comprise a single NW port.

In order to satisfy this assumption, one can optionally further introduce a demultiplexing (Demux) bridge model (608) with a single NW port (610) and as many DS ports (612) as the number of identified groups of UEs. The demultiplexing bridge further comprises, per DS port, an internal link with the NW port. These internal links have zero independent and dependent delays, which corresponds to an infinite capacity. The external links have the characteristics of the physical interface linking the 5GS CN to the TSN network, which usually is an Ethernet interface.

As a result, the end-to-end delay for transmitting two identical packets from an upstream bridge $B_0$ to end stations associated to egress ports of B are related with $1/C'1+1/C'2$ when considering the state-of-the-art model while it is related with $1/min(C'1,C'2)$ with the presently disclosed new model. Thus, the multiplexing capability of the 5GS is well exploited and the end-to-end latency is reduced.

Application to uplink

Although the example above is focused on downlink, the person of ordinary skill in the art can easily apply the same principles for uplink, where the ingress ports are DS ports and the egress ports are NW ports.

Two different models are then built for downlink and for uplink.

Indeed, the uplink radio access techniques might be different from the downlink ones.

This may result in different ways to group the UEs, and in different capacity measurements for the internal links of the bridge.

Considering uplink specifically, the main bridge model has as many ingress ports as the number of UEs handled by the gNBs of the wireless bridge and as many egress ports as the number of groups of UEs.

Optionally, the egress ports of the main bridge model are each connected to an ingress port of a multiplexing (Mux) model having a single egress port.

Algorithms and processing circuit

Figure 9 is a flow chart representing a general algorithm of a computer program that may be stored on a storage medium and/or that may be carried as a signal, for the purpose of carrying out a method for determining a topology of a time-sensitive network model of a wireless bridge of a communication system within a time-sensitive network, for a downlink application.

The algorithm comprises obtaining (700) a partitioning of a set of P user equipments handled by the wireless bridge into N groups of user equipments. N and P are both natural numbers strictly greater than 1. Such partitioning is the clustered data (414) obtained as output of the post-processing (404) when the performance table (406) relates to a downlink application, i.e. downlink data flows from a talker (200) to a listener (202).

As already mentioned, a user equipment being activated when involved in a transmission of at least one data flow through the wireless bridge, and a data flow performance being related to a given data flow of the at least one data flow, for any first subset of user equipments belonging to the same group of user equipments, a concurrent activation of all user equipments of the first subset decreases the data flow performance, at the wireless bridge, with respect to an activation of a single user equipment among the first subset, and for any second subset of user equipments all belonging to different groups, a concurrent activation of all user equipments of the second subset does not decrease the data flow performance, at the wireless bridge, with respect to an activation of a single user equipment among the second subset.

The algorithm next comprises building (702) a topology of a time-sensitive network model of the wireless bridge, the time-sensitive network model comprising at least a main bridge model comprising N network-side ports, a network port being associated with a corresponding group of user equipments handled by the wireless bridge, P device-side ports, a device-side port being associated with a corresponding user equipment, and P internal links, an internal link connecting a device-side port associated to a user equipment of a given group with the network-side port associated to the given group.

The algorithm finally comprises providing (704) the topology of the time-sensitive network model to a centralized network configuration node within the communication system.

Figure 10 is a flow chart representing a general algorithm of a computer program that may be stored on a storage medium and/or that may be carried as a signal, for the purpose of carrying out a method for determining a topology of a time-sensitive network model of a wireless bridge of a communication system within a time-sensitive network, for an uplink application. Such partitioning is the clustered data (414) obtained as output of the post-processing (404) when the performance table (406) relates to an uplink application, i.e. uplink data flows from a listener (202) to a talker (200).

The algorithm comprises partitioning (800) the set of P user equipments into M groups of user equipments such that, an uplink data flow performance being related to an uplink data flow, defined as a data transfer from each activated user equipment to the wireless bridge, for any first subset of user equipments belonging to the same group of user equipments, a concurrent activation of all user equipments of the first subset decreases the uplink data flow performance, at the wireless bridge, with respect to an activation of a single user equipment among the first subset, and for any second subset of user equipments all belonging to different groups, a concurrent activation of all user equipments of the second subset does not decrease the uplink data flow performance, at the wireless bridge, with respect to an activation of a single user equipment among the second subset.

The algorithm next comprises building (802) a topology of an uplink main bridge model, comprising M network-side ports, a network port being associated with a corresponding group of user equipments handled by the wireless bridge, P device-side ports, a device-side port being associated with a corresponding user equipment, and P internal links, an internal link connecting a device-side port associated to a user equipment of a given group with the network-side port associated to the given group.

The algorithm finally comprises providing the topology of the uplink main bridge model, or (more generally) providing (804) the topology of a time-sensitive network model of the wireless bridge that comprises such uplink main bridge model, to a centralized network configuration node within the communication system.

Figure 11 schematically represents a processing circuit (900) suitable for running any one, or a plurality, of the algorithms of Figures 5, 9 and 10. The processing circuit comprises a memory (904) for storing a computer program comprising said algorithm or algorithms. The processing circuit further comprises a processor (902) for accessing the memory and running the computer program. The processing circuit further comprises a communication interface (906), that may be controlled by the processor, for transmitting, at least, the topology, or topologies, of the time-sensitive network model to the centralized network configuration node within the communication system.

Of course, it is indifferent that the processor (902) uses a single core or multiple cores for running the computer program. Cloud computing technologies may also be used for the computer program to be run across processors of multiple processing circuits.

Citation List

For any purpose, the following non-patent elements are cited:

- nplcit1: Lu Si et Li Ruisi. DAC: Deep Autoencoder-based Clustering, a General Deep Learning Framework of Representation Learning. arXiv preprint arXiv:2102.07472, 2021;
- nplcit2: Tom M. Mitchell, "Machine learning", McGraw Hill education; and
- nplcit3: Asperti, A., & Trentin, M. (2020). Balancing reconstruction error and Kullback-Leibler divergence in Variational Autoencoders. IEEE Access, 8, 199440-199448.

**Claims**

1. A method for clustering data flows established through a wireless bridge that is formed by a wireless communication system and integrated within a time-sensitive network,

    - the wireless bridge handling a plurality of user terminals
    - the time-sensitive network comprising a core network-side end station,
    - the time-sensitive network further comprising a plurality of device-side end stations, a device-side end station being attached to a user terminal,
    - at least two data flows being established in the time-sensitive network and forwarded by the wireless bridge, with one data flow being established between the core network-side end station and a single device-side end station,

    the method comprising:

    - obtaining (400), at a functional entity of a core network component of the wireless bridge, for each data flow of the at least two data flows, an indicator of a sequential communication performance of said data flow, corresponding to when the at least two data flows are established sequentially,
    - obtaining (402), for each data flow of the at least two data flows, an indicator of a concurrent communication performance of said data flow, corresponding to when the at least two data flows are established concurrently,
    - clustering (404) the at least two data flows into clusters of dependent data flows based on the obtained indicators, such that:

        o two given data flows are independent if the difference between the sequential communication performance and the concurrent communication performance is lower than a predetermined threshold, and are otherwise dependent,
        o any two data flows belonging to two different clusters are independent, and
        o any two data flows of the same cluster are dependent.

2. The method of claim 1, wherein the communication performance of a data flow established between a pair of end stations relates to at least one element of a list comprising:

- a first value of an end-to-end latency for uplink communication between the pair of end stations,
- a second value of the end-to-end latency for downlink communication between the pair of end stations, and
- a maximum value between the first value and the second value.

3. The method of claim 2, wherein the first value and/or the second value are related to a best-effort communication between the end stations.

4. The method of any one of the preceding claims, wherein, a given user terminal attached to a device-side end station being active when receiving or transmitting a given data flow, and being otherwise inactive:

- the indicator of the sequential communication performance of a first data flow of the at least two data flows comprises:

o a first measurement of a communication performance of the first data flow, and
o a first activity indicator indicating, at least, that, at the time of the first measurement, a first user terminal, attached to the device-side end station involved in receiving or transmitting the first data flow, is active while a second user terminal, attached to the device-side end station involved in receiving or transmitting the second data flow, is inactive, and

- the indicator of the concurrent communication performance of the first data flow comprises:

o a second measurement of a communication performance of the first data flow, and
o a second activity indicator indicating, at least, that, at the time of the second measurement, the first and the second user terminals are both active.

5. The method of claim 4, wherein the activity indicators are determined from binary matrices, a binary matrix comprising a list of binary variables, one binary variable corresponding to one device-side end station, the binary variable having a first value when the user terminal attached to the corresponding device-side end station is active, the binary variable having a second value when the user terminal attached to the corresponding device-side end station is inactive.

6. The method of claim 4 or 5, further comprising:

- prior to obtaining the indicators of sequential and concurrent communication performance for the at least two flows, activating the at least two flows according to a sequence of a plurality of predetermined activation topologies, and
- wherein, for each data flow of the at least two data flows, the indicator of the sequential communication performance of said data flow and the indicator of the concurrent communication performance of said data flow are each obtained by a measurement conducted under a different activation topology of the sequence of activation topologies.

7. The method of claim 6, wherein the sequence of activation topologies is optimized for maximizing a variability of the communication performance of the at least two flows between two consecutive activation topologies.

8. The method of claim 6 or 7, wherein, for any two consecutive activation topologies of the sequence, a fixed number of user terminals is active in one of the two consecutive activation topologies and inactive in the other one.

9. The method of any one of the preceding claims, wherein clustering the at least two data flows into clusters of dependent data flows comprises:

- obtaining an autoencoder comprising an encoder for mapping inputs to a code according to a compression matrix and a decoder for mapping the code to a reconstruction of the inputs according to a decompression matrix, the code being a representation of the inputs as a set of deep feature variables in a reduced feature space,
- training the autoencoder using the obtained indicators of sequential and concurrent communication performance as the inputs,
- after training the autoencoder, obtaining the compression matrix, the decompression matrix and the set of deep feature variables,
- determining a clustering scheme based, at least, on the obtained compression matrix, and
- clustering the at least two data flows according to the clustering scheme, by using the obtained set of deep feature variables as centroids for the clusters.

10. The method of any one of the preceding claims, wherein the clustered data flows all have a same orientation being either uplink or downlink.

11. A communication system of a a time-sensitive network, the communication system comprising a wireless bridge (204) configured to handle a plurality of user terminals (200, 202), the time-sensitive network comprising a core network-side end station, the time-sensitive network further comprising a plurality of device-side end stations, a device-side end station being attached to a user terminal, at least two data flows being established in the time-sensitive network, with one data flow being established between the core network-side end station and a single device-side end station, the communication system being configured for:

- at a functional entity of a core network component of the wireless bridge, obtaining, for each data flow of the at least two data flows, an indicator of a sequential communication performance of said data flow corresponding to when the at least two data flows are established sequentially, and obtaining, for each data flow of the at least two data flows, an indicator of a concurrent communication performance of said data flow, corresponding to when the at least two data flows are established concurrently,
- clustering the at least two data flows into clusters of dependent data flows based on the obtained indicators, such that:

  o two given data flows are independent if the difference between the sequential communication performance and the concurrent communication performance is lower than a predetermined threshold, and are otherwise dependent,
  o any two data flows belonging to two different clusters are independent, and
  o any two data flows of the same cluster are dependent.

12. A computer program comprising instructions which, when the program is executed by a computer, cause the computer to carry out the method of any one of claims 1 to 10.

## Patentansprüche

1. Verfahren zum Clustern von Datenströmen, welche durch eine drahtlose Brücke hergestellt werden, welche durch ein drahtloses Kommunikationssystem gebildet ist und in einem zeitsensitiven Netzwerk integriert ist, wobei

   - die drahtlose Brücke eine Mehrzahl von Nutzerendgeräten handhabt,
   - das zeitsensitive Netzwerk eine Kernnetzwerkseiten-Endstation umfasst,
   - das zeitsensitive Netzwerk ferner eine Mehrzahl von Vorrichtungsseiten-Endstationen umfasst, wobei eine Vorrichtungsseiten-Endstation an einem Nutzerendgerät angebracht ist,
- wenigstens zwei Datenströme in dem zeitsensitiven Netzwerk hergestellt werden und durch die drahtlose Brücke weitergeleitet werden, wobei ein Datenstrom zwischen der Kernnetzwerkseiten-Endstation und einer einzelnen Vorrichtungsseiten-Endstation hergestellt wird,

wobei das Verfahren umfasst:

- Erhalten (400), an einer funktionalen Einheit einer Kernnetzwerkkomponente der drahtlosen Brücke, für jeden Datenstrom der wenigstens zwei Datenströme, eines Indikators einer sequentiellen Kommunikationsperformance des Datenstroms, entsprechend dem, wenn die wenigstens zwei Datenströme sequentiell hergestellt werden,
- Erhalten (402), für jeden Datenstrom der wenigstens zwei Datenströme, eines Indikators einer gleichzeitigen Kommunikationsperformance des Datenstroms, entsprechend dem, wenn die wenigstens zwei Datenströme gleichzeitig hergestellt werden,
- Clustern (404) der wenigstens zwei Datenströme in Cluster von abhängigen Datenströmen auf Grundlage der erhaltenen Indikatoren, sodass:

  - zwei gegebene Datenströme unabhängig sind, wenn der Unterschied zwischen der sequentiellen Kommunikationsperformance und der gleichzeitigen Kommunikationsperformance niedriger ist als ein vorbestimmter Schwellenwert, und ansonsten abhängig sind,
  - zwei beliebige Datenströme, welche zu zwei unterschiedlichen Clustern gehören, unabhängig sind, und
  - zwei beliebige Datenströme des gleichen Clusters abhängig sind.

2. Verfahren nach Anspruch 1, wobei die Kommunikationsperformance eines Datenstroms, welcher zwischen einem Paar von Endstationen hergestellt wird, sich auf wenigstens ein Element einer Liste bezieht, welche umfasst:

   - einen ersten Wert einer Ende-zu-Ende-Latenz für eine Uplink-Kommunikation zwischen dem Paar von Endstationen,
   - einen zweiten Wert der Ende-zu-Ende-Latenz für eine Downlink-Kommunikation zwischen dem Paar von Endstationen, und
   - einem maximalen Wert zwischen dem ersten Wert und dem zweiten Wert.

3. Verfahren nach Anspruch 2, wobei sich der erste Wert und/oder der zweite Wert auf eine bestleistende Kommunikation zwischen den Endstationen beziehen.

4. Verfahren nach einem der vorhergehenden Ansprüche, wobei ein gegebenes Nutzerendgerät, welches an einer Vorrichtungsseiten-Endstation angebracht ist, aktiv ist, wenn ein gegebener Datenstrom empfangen oder übertragen wird, und andernfalls inaktiv ist, wobei:

- der Indikator der sequentiellen Kommunikationsperformance eines ersten Datenstroms der wenigstens zwei Datenströme umfasst:

- eine erste Messung einer Kommunikationsperformance des ersten Datenstroms, und
- einen ersten Aktivitätsindikator, welcher wenigstens anzeigt, dass, zu der Zeit der ersten Messung, ein erstes Nutzerendgerät, welches an der Vorrichtungsseiten-Endstation angebracht ist, welche an einem Empfangen oder einem Übertragen des ersten Datenstroms beteiligt ist, aktiv ist, während ein zweites Nutzerendgerät, welches an der Vorrichtungsseiten-Endstation angebracht ist, welche an einem Empfangen oder einem Übertragen des zweiten Datenstroms beteiligt ist, inaktiv ist, und

- der Indikator der gleichzeitigen Kommunikationsperformance des ersten Datenstroms umfasst:

- eine zweite Messung einer Kommunikationsperformance des ersten Datenstroms, und
- einen zweiten Aktivitätsindikator, welcher wenigstens anzeigt, dass, zu der Zeit der zweiten Messung, sowohl das erste als auch das zweite Nutzerendgerät inaktiv ist.

5. Verfahren nach Anspruch 4, wobei die Aktivitätsindikatoren aus binären Matrizen bestimmt werden, wobei eine binäre Matrix eine Liste von binären Variablen umfasst, wobei eine binäre Variable einer Vorrichtungsseiten-Endstation entspricht, wobei die binäre Variable einen ersten Wert aufweist, wenn das Nutzerendgerät, welches an dem entsprechenden Vorrichtungsseiten-Endgerät angebracht ist, aktiv ist, wobei die binäre Variable einen zweiten Wert aufweist, wenn das Nutzerendgerät, welches an dem entsprechenden Vorrichtungsseiten-Endgerät angebracht ist, inaktiv ist.

6. Verfahren nach Anspruch 4 oder 5, welches ferner umfasst:

- vor einem Erhalten der Indikatoren einer sequentiellen und gleichzeitigen Kommunikationsperformance für die wenigstens zwei Ströme, Aktivieren der wenigstens zwei Ströme gemäß einer Sequenz einer Mehrzahl von vorbestimmten Aktivierungstopologien, und
- wobei, für jeden Datenstrom der wenigstens zwei Datenströme, der Indikator der sequentiellen Kommunikationsperformance des Datenstroms und der Indikator der gleichzeitigen Kommunikationsperformance des Datenstroms jeweils durch eine Messung erhalten werden, welche unter einer unterschiedlichen Aktivierungstopologie der Sequenz von Aktivierungstopologien ausgeführt wird.

7. Verfahren nach Anspruch 6, wobei die Sequenz von Aktivierungstopologien für ein Maximieren einer Variabilität der Kommunikationsperformance der wenigstens zwei Ströme zwischen zwei aufeinanderfolgenden Aktivierungstopologien optimiert wird.

8. Verfahren nach Anspruch 6 oder 7, wobei, für zwei beliebige aufeinanderfolgende Aktivierungstopologien der Sequenz, eine feste Anzahl von Nutzerendgeräten in einer der zwei aufeinanderfolgenden Aktivierungstopologien aktiv ist und in der anderen inaktiv ist.

9. Verfahren nach einem der vorhergehenden Ansprüche, wobei das Clustern der wenigstens zwei Datenströme in Cluster von abhängigen Datenströmen umfasst:

- Erhalten eines Autoencoders, welcher einen Encoder für ein Abbilden von Eingaben auf einem Code gemäß einer Kompressionsmatrix und einen Decoder für ein Abbilden des Codes auf einer Wiederherstellung der Eingaben gemäß einer Dekompressionsmatrix umfasst, wobei der Code eine Repräsentation der Eingaben als ein Satz von tiefen Merkmalsvariablen in einem Reduzieren Merkmalsraum ist,
- Trainieren des Autoencoders unter Verwendung der erhaltenen Indikatoren einer sequentiellen und gleichzeitigen Kommunikationsperformance als die Eingaben,
- nach dem Trainieren des Autoencoders, Erhalten der Kompressionsmatrix, der Dekompressionsmatrix und des Satzes von tiefen Merkmalsvariablen,
- Bestimmen eines Clusterschemas auf Grundlage wenigstens der erhaltenen Kompressionsmatrix, und
- Clustern der wenigstens zwei Datenströme gemäß dem Clusterschema unter Verwendung des erhaltenen Satzes von tiefen Merkmalsvariablen als Schwerpunkte für die Cluster.

**10.** Verfahren nach einem der vorhergehenden Ansprüche, wobei die geclusterten Datenströme alle eine gleiche Orientierung aufweisen, welche entweder Uplink oder Downlink ist.

**11.** Kommunikationssystem eines zeitsensitiven Netzwerks, wobei das Kommunikationssystem eine drahtlose Brücke (204) umfasst, welche dazu eingerichtet ist, eine Mehrzahl von Nutzerendgeräten (200, 202) zu handhaben, wobei das zeitsensitive Netzwerk eine Kernnetzwerkseiten-Endstation umfasst, wobei das zeitsensitive Netzwerk ferner eine Mehrzahl von Vorrichtungsseiten-Endstationen umfasst, wobei eine Vorrichtungsseiten-Endstation an einem Nutzerendgerät angebracht ist, wobei wenigstens zwei Datenströme in dem zeitsensitiven Netzwerk hergestellt sind, wobei ein Datenstrom zwischen der Kernnetzwerkseiten-Endstation und einer einzelnen Vorrichtungsseiten-Endstation hergestellt ist, wobei das Kommunikationssystem dazu eingerichtet ist:

- an einer funktionalen Einheit einer Kernnetzwerkkomponente der drahtlosen Brücke, für jeden Datenstrom der wenigstens zwei Datenströme, einen Indikator einer sequentiellen Kommunikationsperformance des Datenstroms zu erhalten, entsprechend dem, wenn die wenigstens zwei Datenströme sequentiell hergestellt sind, und, für jeden Datenstrom der wenigstens zwei Datenströme, einen Indikator einer gleichzeitigen Kommunikationsperformance des Datenstroms zu erhalten, entsprechend dem, wenn die wenigstens zwei Datenströme gleichzeitig hergestellt sind,
- die wenigstens zwei Datenströme in Cluster von abhängigen Datenströmen auf Grundlage der erhaltenen Indikatoren zu clustern, sodass:

- zwei gegebene Datenströme unabhängig sind, wenn der Unterschied zwischen der sequentiellen Kommunikationsperformance und der gleichzeitigen Kommunikationsperformance niedriger ist als ein vorbestimmter Schwellenwert, und ansonsten abhängig sind,
- zwei beliebige Datenströme, welche zu zwei unterschiedlichen Clustern gehören, unabhängig sind, und
- zwei beliebige Datenströme des gleichen Clusters abhängig sind.

**12.** Computerprogramm, welches Anweisungen umfasst, welche, wenn das Programm durch einen Computer ausgeführt wird, den Computer veranlassen, das Verfahren nach einem der Ansprüche 1 bis 10 durchzuführen.

**Revendications**

**1.** Procédé de regroupement de flux de données établis par l'intermédiaire d'un pont sans fil qui est formé par un système de communication sans fil et intégré à l'intérieur d'un réseau sensible au temps,

- le pont sans fil gérant une pluralité de terminaux utilisateurs,
- le réseau sensible au temps comprenant une station d'extrémité côté réseau central,
- le réseau sensible au temps comprenant en outre une pluralité de stations d'extrémité côté dispositif, une station d'extrémité côté dispositif étant rattachée à un terminal utilisateur,
- au moins deux flux de données étant établis dans le réseau sensible au temps et acheminés par le pont sans fil, avec un flux de données étant établi entre la station d'extrémité côté réseau central et une unique station d'extrémité côté dispositif,

le procédé comprenant :

- l'obtention (400), au niveau d'une entité fonctionnelle d'un composant de réseau central du pont sans fil, pour chaque flux de données des au moins deux flux de données, d'un indicateur d'une performance de communication séquentielle dudit flux de données, correspondant à quand les au moins deux flux de données sont établis de façon séquentielle,
- l'obtention (402), pour chaque flux de données des au moins deux flux de données, d'un indicateur d'une performance de communication simultanée dudit flux de données, correspondant à quand les au moins deux flux de données sont établis de façon simultanée,
- le regroupement (404) des au moins deux flux de données dans des groupes de flux de données dépendants sur la base des indicateurs obtenus, de sorte que :

∘ deux flux de données donnés sont indépendants si la différence entre la performance de communication séquentielle et la performance de communication simultanée est inférieure à un seuil prédéterminé, et sont autrement dépendants,
∘ n'importe quels deux flux de données appartenant à deux groupes différents sont indépendants, et
∘ n'importe quels deux flux de données du même groupe sont dépendants.

**2.** Procédé selon la revendication 1, dans lequel la performance de communication d'un flux de données établi entre une paire de stations d'extrémité concerne au moins un élément parmi une liste comprenant :

- une première valeur d'une latence de bout en bout pour une communication de liaison montante entre la paire de stations d'extrémité,
- une seconde valeur de la latence de bout en bout pour une communication de liaison descendante entre la paire de stations d'extrémité, et
- une valeur maximale entre la première valeur et la seconde valeur.

3. Procédé selon la revendication 2, dans lequel la première valeur et/ou la seconde valeur sont relatives à une communication au mieux entre les stations d'extrémité.

4. Procédé selon l'une quelconque des revendications précédentes, dans lequel un terminal utilisateur donné rattaché à une station d'extrémité côté dispositif étant actif lors de la réception ou la transmission d'un flux de données donné, et étant autrement inactif :

- l'indicateur de la performance de communication séquentielle d'un premier flux de données des au moins deux flux de données comprend :

   ◦ une première mesure d'une performance de communication du premier flux de données, et
   ◦ un premier indicateur d'activité indiquant, au moins, que, au moment de la première mesure, un premier terminal utilisateur, rattaché à la station d'extrémité côté dispositif impliquée dans la réception ou la transmission du premier flux de données, est actif alors qu'un second terminal utilisateur, rattaché à la station d'extrémité côté dispositif impliquée dans la réception ou la transmission du second flux de données, est inactif, et

- l'indicateur de la performance de communication simultanée du premier flux de données comprend :

   ◦ une seconde mesure de performance de communication du premier flux de données, et
   ◦ un second indicateur d'activité indiquant, au moins, que, au moment de la seconde mesure, les premier et second terminaux utilisateurs sont tous les deux actifs.

5. Procédé selon la revendication 4, dans lequel les indicateurs d'activité sont déterminés à partir de matrices binaires, une matrice binaire comprenant une liste de variables binaires, une variable binaire correspondant à une station d'extrémité côté dispositif, la variable binaire ayant une première valeur quand le terminal utilisateur rattaché à la station d'extrémité côté dispositif correspondante est actif, la variable binaire ayant une seconde valeur quand le terminal utilisateur rattaché à la station d'extrémité côté dispositif correspondante est inactif.

6. Procédé selon la revendication 4 ou 5, comprenant en outre :

- avant l'obtention des indicateurs de performance de communication séquentielle et simultanée pour les au moins deux flux, l'activation des au moins deux flux selon une séquence d'une pluralité de typologies d'activation prédéterminées, et
- dans lequel, pour chaque flux de données des au moins deux flux de données, l'indicateur de la performance de communication séquentielle dudit flux de données et l'indicateur de la performance de communication simultanée dudit flux de données sont obtenus chacun par une mesure réalisée selon une topologie d'activation différente de la séquence de topologies d'activation.

7. Procédé selon la revendication 6, dans lequel la séquence de topologies d'activation est optimisée pour maximiser une variabilité de la performance de communication des au moins deux flux entre deux topologies d'activation consécutives.

8. Procédé selon la revendication 6 ou 7, dans lequel, pour n'importe quelles deux topologies d'activation consécutives de la séquence, un nombre fixe de terminaux utilisateurs est actif dans une des deux topologies d'activation consécutives et inactif dans l'autre.

9. Procédé selon l'une quelconque des revendications précédentes, dans lequel le regroupement des au moins deux flux de données dans des groupes de flux de données dépendants comprend :

- l'obtention d'un auto-codeur comprenant un codeur pour le mappage d'entrées à un code selon une matrice de compression et un décodeur pour le mappage du code à une reconstruction des entrées selon une matrice de décompression, le code étant une représentation des entrées comme un ensemble de variables de caractéristiques profondes dans un espace de caractéristique réduite,
- l'apprentissage de l'auto-codeur en utilisant les indicateurs obtenus de performance de communication séquentielle et simultanée comme les entrées,

- après l'apprentissage de l'auto-codeur, l'obtention de la matrice de compression, de la matrice de décompression et de l'ensemble de variables de caractéristiques profondes,

- la détermination d'un schéma de regroupement sur la base, au moins, de la matrice de compression obtenue, et

- le regroupement des au moins deux flux de données selon le schéma de regroupement, en utilisant l'ensemble obtenu de variables de caractéristiques profondes comme des centroïdes pour les groupes.

10. Procédé selon l'une quelconque des revendications précédentes, dans lequel les flux de données regroupés ont tous une même orientation qui est soit de liaison montante soit de liaison descendante.

11. Système de communication d'un réseau sensible au temps, le système de communication comprenant un pont sans fil (204) configuré pour gérer une pluralité de terminaux utilisateurs (200, 202), le réseau sensible au temps comprenant une station d'extrémité côté réseau central, le réseau sensible au temps comprenant en outre une pluralité de stations d'extrémité côté dispositif, une station d'extrémité côté dispositif étant rattachée à un terminal utilisateur, au moins deux flux de données étant établis dans le réseau sensible au temps, avec un flux de données étant établi entre la station d'extrémité côté réseau central et une unique station d'extrémité côté dispositif, le système de communication étant configuré pour :

- au niveau d'une entité fonctionnelle d'un composant de réseau central du pont sans fil, obtenir, pour chaque flux de données des au moins deux flux de données, un indicateur d'une performance de communication séquentielle dudit flux de données, correspondant à quand les au moins deux flux de données sont établis de façon séquentielle, et obtenir, pour chaque flux de données des au moins deux flux de données, un indicateur d'une performance de communication simultanée dudit flux de données, correspondant à quand les au moins deux flux de données sont établis de façon simultanée,

- regrouper les au moins deux flux de données dans des groupes de flux de données dépendants sur la base des indicateurs obtenus, de sorte que :

○ deux flux de données donnés sont indépendants si la différence entre la performance de communication séquentielle et la performance de communication simultanée est inférieure à un seuil prédéterminé, et sont autrement dépendants,

○ n'importe quels deux flux de données appartenant à deux groupes différents sont indépendants, et

○ n'importe quels deux flux de données du même groupe sont dépendants.

12. Programme d'ordinateur comprenant des instructions qui, quand le programme est exécuté par un ordinateur, amènent l'ordinateur à réaliser le procédé selon l'une quelconque des revendications 1 à 10.

Fig. 1

Fig. 2

206

CUC

208 CNC

200

202

204 204 204

Fig. 3

204

Logical (TSN) Bridge

Device side of Bridge

Network side of Bridge

308

200

300 302

UDM — NEF

N8   N10

N33

AF as TSN Translator (CP)

202

AMF —N11— SMF —N7— PCF N5

N1  N2

304

N4

306

C-Plane

TSN talker

DS-TT N60 UE

(R)AN —N3—

UPF

N6

NW-TT (UP)

U-plane

TSN System

TSN listenr

N9

310

PDU session

E2E measurments

Fig. 4

406

| $I_0=[0\ 0\ 1]$ | $[\tau_{01}\ \tau_{02}\ \tau_{03}]$ |
|---|---|
| $I_1=[0\ 1\ 0]$ | $[\tau_{11}\ \tau_{12}\ \tau_{13}]$ |
| $I_2=[0\ 1\ 1]$ | $[\tau_{21}\ \tau_{22}\ \tau_{23}]$ |

400 → PREPROC

408

| $I_0=[0\ 0\ 1]$ | $[\tau_{01}\ \tau_{02}\ \tau_{03}]$ |
|---|---|
| $I_2=[0\ 1\ 1]$ | $[\tau_{21}\ \tau_{22}\ \tau_{23}]$ |
| $I_1=[0\ 1\ 0]$ | $[\tau_{11}\ \tau_{12}\ \tau_{13}]$ |

402 → FEAT DET + CLUST

410

| $I_0=[0\ 0\ 1]$ | $[\tau_{01}\ \tau_{02}\ \tau_{03}]$ |
|---|---|
| $I_2=[0\ 1\ 1]$ | $[\tau_{21}\ \tau_{22}\ \tau_{23}]$ |
| $I_1=[0\ 1\ 0]$ | $[\tau_{11}\ \tau_{12}\ \tau_{13}]$ |

412

404 → POST-PROC

414

| $I_0=[0\ 0\ 1]$ | $[\tau_{01}\ \tau_{02}\ \tau_{03}]$ |
|---|---|
| $I_2=[0\ 1\ 1]$ | $[\tau_{21}\ \tau_{22}\ \tau_{23}]$ |
| $I_1=[0\ 1\ 0]$ | $[\tau_{11}\ \tau_{12}\ \tau_{13}]$ |

416

418

Fig. 5

## Fig. 6

## Fig. 7

608 600

$B_0$ B 604

$C_1$

610 612 602 $C_2$ 606

## Fig. 8

700 OBT GRP/DL

702 DET TOP TSN MODEL/DL

704 PROV TOP TSN MODEL/DL

## Fig. 9

800 OBT GRP/UL

802 DET TOP TSN MODEL/UL

804 PROV TOP TSN MODEL/UL

Fig. 10

906 COM

900

902 CPU MEM 904

Fig. 11

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2022046731 A1, TALEBI FARD PEYMAN

**Non-patent literature cited in the description**

- **LU SI** ; **LI RUISI**. DAC: Deep Autoencoder-based Clustering, a General Deep Learning Framework of Representation Learning. *arXiv:2102.07472*, 2021
- **TOM M. MITCHELL**. Machine learning. McGraw Hill
- **ASPERTI, A.** ; **TRENTIN, M.** Balancing reconstruction error and Kullback-Leibler divergence in Variational Autoencoders. *IEEE Access*, 2020, vol. 8, 199440-199448